# EUROPEAN PATENT SPECIFICATION

(11) **EP 3 589 010 B1**
(45) Date of publication and mention of the grant of the patent: **21.05.2025**
(21) Application number: 18772609.6
(22) Date of filing: 21.03.2018
(51) Int. Cl.: H04W 28/02

(54) **WIRELESS COMMUNICATION METHOD, TERMINAL, ACCESS NETWORK DEVICE, AND NETWORK SYSTEM**
DRAHTLOSKOMMUNIKATIONSVERFAHREN, ENDGERÄT, ZUGANGSNETZWERKVORRICHTUNG UND NETZWERKSYSTEM
PROCÉDÉ DE COMMUNICATION SANS FIL, TERMINAL, DISPOSITIF DE RÉSEAU D'ACCÈS ET SYSTÈME DE RÉSEAU

(30) Priority: 24.03.2017 CN 201710184939
(43) Date of publication of application: 01.01.2020
(73) Proprietor: Huawei Technologies Co., Ltd., Longgang District Shenzhen, Guangdong 518129 (CN)
(72) Inventor: LI, Hong, Shenzhen Guangdong 518129 (CN); HAN, Feng, Shenzhen Guangdong 518129 (CN); JIN, Yinghao, Shenzhen Guangdong 518129 (CN)
(74) Representative: Körber, Martin Hans
(86) International application number: PCT/CN2018/079891
(87) International publication number: WO 2018/171639

(56) References cited:
- CN-A- 101 848 056
- CN-A- 103 188 146
- CN-A- 104 283 647
- CN-A- 107 637 123
- US-A1- 2012 113 877
- LG ELECTRONICS INC: "Configurability for QoS flow ID attachment", vol. RAN WG2, no. Athenes, Greece; 20170213 - 20170217, 12 February 2017 (2017-02-12), XP051212483, Retrieved from the Internet <URL:http://www.3gpp.org/ftp/Meetings_3GPP_SYNC/RAN2/Docs/> [retrieved on 20170212]
- ERICSSON: "QoS framework for NR", vol. RAN WG2, no. Reno, Nevada, USA; 20161114 - 20161118, 13 November 2016 (2016-11-13), XP051178213, Retrieved from the Internet <URL:http://www.3gpp.org/ftp/Meetings_3GPP_SYNC/RAN2/Docs/> [retrieved on 20161113]
- 3GPP: "3rd Generation Partnership Project; Technical Specification Group Services and System Aspects; Study on Architecture for Next Generation System (Release 14)", 3GPP, 31 August 2016 (2016-08-31), FR, pages 1 - 332, XP055604451, Retrieved from the Internet <URL:http://www.3gpp.org> [retrieved on 20190710]
- HUAWEI ET AL: "Flow, DRB, and QoS in RAN", vol. RAN WG2, no. Gothenburg, Sweden; 20160822 - 20160826, 21 August 2016 (2016-08-21), XP051126664, Retrieved from the Internet <URL:http://www.3gpp.org/ftp/Meetings_3GPP_SYNC/RAN2/Docs/> [retrieved on 20160821]

## Description

### TECHNICAL FIELD

Embodiments of the present invention relate to the wireless network communications field, and in particular, to a wireless communication method, a terminal, and an access network device.

### BACKGROUND

A QoS flow concept is introduced into a quality of service (quality of service, QoS for short) architecture of a 5th generation (5G) network defined by the 3rd Generation Partnership Project (Third Generation Partnership Project, 3GPP for short) organization. Data may be transmitted on a core network device and an interface between the core network device and an access network device based on a QoS flow, and a bearer concept is retained between the access network device and a terminal. One or more QoS flows may be mapped to a same bearer.

To identify a QoS flow, the QoS flow needs to include a flow identifier (ID). Because the 5G network can support many service types, a size of the flow ID may be very large, and during data transmission, the flow ID causes relatively large extra transmission overheads.

LG ELECTRONICS INC, "Configurability for QoS flow ID attachment", vol. RAN WG2, no. Athenes, Greece; 20170213 - 20170217, (20170212), 3GPP DRAFT; R2-1701962 CONFIGURABILITY FOR QOS FLOW ID ATTACHMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, discloses configuration of QoS flow IDs.

ERICSSON, "QoS framework for NR", vol. RAN WG2, no. Reno, Nevada, USA; 20161114 - 20161118, (20161113), 3GPP DRAFT; R2-168657 - QOS FRAMEWORK FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discloses mapping of flows to DRBs.

### SUMMARY

The present invention is defined by the independent claims. Additional features of the invention are provided in the dependent claims. Aspects or embodiments that do not fall within the scope of the appended claims, are non-claimed embodiments and are presented only as information. Embodiments of the present invention provide a wireless communication method, a terminal, and an access network device, to reduce overheads during data transmission.

According to a first aspect, an embodiment of the present invention provides a wireless communication method, including the following steps: receiving, by an access network device, a first downlink data flow that includes first downlink data and that is sent by a core network device, where the first downlink data flow includes a first flow identifier; and sending, by the access network device, a second downlink data flow that includes the first downlink data to a terminal, where the second downlink data flow includes a second flow identifier, a length of the second flow identifier is less than a length of the first flow identifier, and the first flow identifier corresponds to the second flow identifier. The second flow identifier is used in data transmission between the access network device and the terminal, the length of the second flow identifier is smaller, and air interface data transmission overheads can be reduced.

In a possible design, the access network device receives a first uplink data flow that includes first uplink data and that is sent by the terminal, where the first uplink data flow includes the second flow identifier. The access network device sends a second uplink data flow that includes the first uplink data to the core network device, where the second uplink data flow includes the first flow identifier.

According to a second aspect, an embodiment of the present invention provides a wireless communication method, including the following steps: receiving, by an access network device, a first uplink data flow that includes first uplink data and that is sent by a terminal, where the first uplink data flow includes a second flow identifier; and sending, by the access network device, a second uplink data flow that includes the first uplink data to the core network device, where the second uplink data flow includes the first flow identifier, where a length of the second flow identifier is less than a length of the first flow identifier, and the first flow identifier corresponds to the second flow identifier.

With reference to the first aspect or the second aspect, in a possible design, the method further includes: sending, by the access network device, a mapping relationship between the second flow identifier and the first flow identifier to the terminal. After the mapping relationship is obtained, the second flow identifier whose length is smaller may be used on an air interface, so that the overheads during data transmission may be reduced.

With reference to the first aspect or the second aspect, in a possible design, the first downlink data flow further includes a reflective quality of service indication, and the first one or the first group in the second downlink data flow further includes the first flow identifier. After the first flow identifier is added to the first one or the first group in the second downlink data flow, the terminal may obtain information about the first flow identifier through data transmission, and obtain the mapping relationship between the second flow identifier and the first flow identifier. This can reduce signaling overheads. In addition, simply after the first flow identifier is added to the first one or the first group in the second downlink data flow, the terminal may obtain the second flow identifier. The second flow identifier does not need to be added to data after the first one or the first group in the second downlink data flow, and data transmission overheads may be further reduced after the data flow is directly identified by using the second flow identifier.

With reference to the first aspect or the second aspect, in a possible design, the access network device is an access network device user plane functional entity. The method further includes: sending, by the access network device user plane functional entity, a first request message to an access network device control plane functional entity, where the first request message includes the second flow identifier; and receiving, by the access network device user plane functional entity, a first response message sent by the access network device control plane functional entity, where the first response message includes a mapping relationship between the second flow identifier and the first flow identifier. According to the foregoing method, the access network device may obtain the mapping relationship between the second flow identifier and the first flow identifier, and the second flow identifier whose length is smaller may be used on an air interface, so that the overheads during data transmission may be reduced.

With reference to the first aspect or the second aspect, in a possible design, the first downlink data flow is transmitted in a form of a flow, and the second downlink data flow is transmitted in a form of a bearer.

With reference to the first aspect or the second aspect, in a possible design, the first uplink data flow is transmitted in a form of a bearer, and the second uplink data flow is transmitted in a form of a flow.

According to a third aspect, an embodiment of the present invention provides a wireless communication method, including the following steps: obtaining, by a terminal, a mapping relationship between a second flow identifier and a first flow identifier; and receiving, by the terminal, a downlink data flow sent by an access network device, where the downlink data flow includes the second flow identifier, where a length of the second flow identifier is less than a length of the first flow identifier, the downlink data flow is identified by using the second flow identifier when the downlink data flow is transmitted between the access network device and the terminal, and the downlink data flow is identified by using the first flow identifier when the downlink data flow is transmitted between the access network device and a core network device.

With reference to the third aspect, in a possible design, the terminal sends an uplink data flow to the access network device, where the uplink data flow includes the second flow identifier, where the uplink data flow is identified by using the second flow identifier when the uplink data flow is transmitted between the access network device and the terminal; and the uplink data flow is identified by using the first flow identifier when the uplink data flow is transmitted between the access network device and the core network device.

According to a fourth aspect, an embodiment of the present invention provides a wireless communication method, including the following steps: obtaining, by a terminal, a mapping relationship between a second flow identifier and a first flow identifier; and sending, by the terminal, a first uplink data flow that includes first uplink data to an access network device, where the first uplink data flow includes the second flow identifier, where a length of the second flow identifier is less than a length of the first flow identifier, and the first uplink data flow is identified by using the second flow identifier when the first uplink data flow is transmitted between the access network device and the terminal; or the first uplink data is identified by using the first flow identifier when the first uplink data is transmitted between the access network device and a core network device.

With reference to the third aspect or the fourth aspect, in a possible design, the obtaining, by a terminal, a mapping relationship between a second flow identifier and a first flow identifier includes: receiving, by the terminal, first information from the access network device, where the first information includes information about the mapping relationship between the second flow identifier and the first flow identifier.

With reference to the third aspect or the fourth aspect, in a possible design, the downlink data flow further includes a reflective quality of service indication, and the first one or the first group in the downlink data flow further includes the first flow identifier. The obtaining, by a terminal, a mapping relationship between a second flow identifier and a first flow identifier includes: obtaining, by the terminal, the mapping relationship between the second flow identifier and the first flow identifier based on the first flow identifier in the first one or the first group in the downlink data flow and the second flow identifier.

With reference to the third aspect or the fourth aspect, in a possible design, the terminal sends a third uplink data flow that includes third uplink data to the access network device, where the third uplink data flow includes the first flow identifier.

According to a fifth aspect, an embodiment of the present invention provides a wireless communication method, including the following steps: determining, by an access network device, a mapping relationship between a second flow identifier and a first flow identifier; and sending, by the access network device, first information to a terminal, where the first information includes information about the mapping relationship between the second flow identifier and the first flow identifier, where the first flow identifier is used to identify a data flow transmitted between the access network device and a core network device, the second flow identifier is used to identify a data flow transmitted between the access network device and the terminal, and a length of the first flow identifier is less than a length of the second flow identifier.

With reference to the fifth aspect, in a possible design, the access network device is an access network device control plane entity. The method further includes: receiving, by the access network device control plane entity, a first request from an access network device user plane entity, where the first request includes the first flow identifier and quality of service information of a data flow corresponding to the first flow identifier, and the first request is used to obtain the mapping relationship between the second flow identifier and the first flow identifier.

According to a sixth aspect, an embodiment of the present invention provides a network device, including: a receiving unit, configured to receive a first downlink data flow that includes first downlink data and that is sent by a core network device, where the first downlink data flow includes a first flow identifier; and a sending unit, configured to send a second downlink data flow that includes the first downlink data to a terminal, where the second downlink data flow includes a second flow identifier, a length of the second flow identifier is less than a length of the first flow identifier, and the first flow identifier corresponds to the second flow identifier.

With reference to the sixth aspect, in a possible design, the receiving unit is further configured to receive a first uplink data flow that includes first uplink data and that is sent by the terminal, where the first uplink data flow includes a second flow identifier; and the sending unit is further configured to send a second uplink data flow that includes the first uplink data to the core network device, where the second uplink data flow includes the first flow identifier.

According to a seventh aspect, an embodiment of the present invention provides a network device, including: a receiving unit, configured to receive a first uplink data flow that includes first uplink data and that is sent by a terminal, where the first uplink data flow includes a second flow identifier; and a sending unit, configured to send a second uplink data flow that includes the first uplink data to the core network device, where the second uplink data flow includes the first flow identifier, where a length of the second flow identifier is less than a length of the first flow identifier, and the first flow identifier corresponds to the second flow identifier.

With reference to the sixth aspect and the seventh aspect, in a possible design, the sending unit is further configured to send a mapping relationship between the second flow identifier and the first flow identifier.

With reference to the sixth aspect or the seventh aspect, in a possible design, the first downlink data flow further includes a reflective quality of service indication, and the first one or the first group in the second downlink data flow further includes the first flow identifier.

With reference to the sixth aspect or the seventh aspect, in a possible design, the access network device is an access network device user plane functional entity; the sending unit is further configured to send a first request message to an access network device control plane functional entity, where the first request message includes the second flow identifier; and the receiving unit is further configured to receive a first response message sent by the access network device control plane functional entity, where the first response message includes the mapping relationship between the second flow identifier and the first flow identifier.

With reference to the sixth aspect or the seventh aspect, in a possible design, the first downlink data flow is transmitted in a form of a flow, and the second downlink data flow is transmitted in a form of a bearer.

With reference to the sixth aspect or the seventh aspect, in a possible design, the first uplink data flow is transmitted in a form of a bearer, and the second uplink data flow is transmitted in a form of a flow.

According to an eighth aspect, an embodiment of the present invention provides a terminal, including: a processing unit, where the processing unit is configured to obtain a mapping relationship between a second flow identifier and a first flow identifier; and a receiving unit, configured to receive a downlink data flow sent by an access network device, where the downlink data flow includes the second flow identifier, where a length of the second flow identifier is less than a length of the first flow identifier, the downlink data flow is identified by using the second flow identifier when the downlink data flow is transmitted between the access network device and the terminal, and the downlink data flow is identified by using the first flow identifier when the downlink data flow is transmitted between the access network device and a core network device.

With reference to the eighth aspect, in a possible design, the terminal further includes: a sending unit, configured to send an uplink data flow to the access network device, where the uplink data flow includes the second flow identifier, where the uplink data flow is identified by using the second flow identifier when the uplink data flow is transmitted between the access network device and the terminal; and the uplink data flow is identified by using the first flow identifier when the uplink data flow is transmitted between the access network device and the core network device.

With reference to the eighth aspect, in a possible design, the sending unit is further configured to send a third uplink data flow that includes third uplink data to the access network device, where the third uplink data flow includes the first flow identifier.

According to a ninth aspect, an embodiment of the present invention provides a terminal, including: a processing unit, configured to obtain a mapping relationship between a second flow identifier and a first flow identifier; and a receiving unit, configured to receive a first uplink data flow that includes first uplink data and that is sent by an access network device, where the first uplink data flow includes the second data identifier, where a length of the second flow identifier is less than a length of the first flow identifier, and the first uplink data flow is identified by using the second flow identifier when the first uplink data flow is transmitted between the access network device and the terminal; or the first uplink data is identified by using the first flow identifier when the first uplink data is transmitted between the access network device and a core network device.

With reference to the eighth aspect or the ninth aspect, in a possible design, the receiving unit is further configured to receive first information from the access network device, where the first information includes information about the mapping relationship between the second flow identifier and the first flow identifier. The processing unit obtains the information about the mapping relationship between the second flow identifier and the first flow identifier based on the first information.

With reference to the eighth aspect or the ninth aspect, in a possible design, the downlink data flow further includes a reflective quality of service indication, and the first one or the first group in the downlink data flow further includes the first flow identifier; and the processing unit obtains the mapping relationship between the second flow identifier and the first flow identifier based on the first flow identifier in the first one or the first group in the downlink data flow and the second flow identifier.

With reference to the ninth aspect, in a possible design, the terminal further includes a sending unit. The sending unit is configured to send a third uplink data flow that includes third uplink data to the access network device, where the third uplink data flow includes the first flow identifier.

According to a tenth aspect, an embodiment of the present invention provides a network device, including: a processing unit, configured to determine a mapping relationship between a second flow identifier and a first flow identifier; and a sending unit, configured to send first information to a terminal, where the first information includes information about the mapping relationship between the second flow identifier and the first flow identifier, where the first flow identifier is used to identify a data flow transmitted between the access network device and a core network device, the second flow identifier is used to identify a data flow transmitted between the access network device and the terminal, and a length of the first flow identifier is less than a length of the second flow identifier.

With reference to the tenth aspect, in a possible design, the network device is an access network device control plane entity, and the network device further includes a receiving unit. The receiving unit is configured to receive a first request from an access network device user plane entity, where the first request includes the first flow identifier and quality of service information of a data flow corresponding to the first flow identifier, and the first request is used to obtain the mapping relationship between the second flow identifier and the first flow identifier.

According to an eleventh aspect, an embodiment of the present invention provides a network device, including a processor, a memory, and a transceiver, to perform the method in the first, second, or fifth aspect, or any possible design of any one of the foregoing aspects.

According to a twelfth aspect, an embodiment of the present invention provides a terminal, including a processor, a memory, and a transceiver, to perform the method in the third or fourth aspect, or any possible design of any one of the foregoing aspects.

According to a thirteenth aspect, an embodiment of the present invention provides a computer readable medium, configured to store a computer program. The computer program includes an instruction used to perform the method in the first, second, or fifth aspect, or any possible design of any one of the foregoing aspects.

According to a fourteenth aspect, an embodiment of the present invention provides a computer readable medium, configured to store a computer program. The computer program includes an instruction used to perform the method in the third or fourth aspect, or any possible design of any one of the foregoing aspects.

According to a fifteenth aspect, an embodiment of the present invention provides a network system, including the network device in the foregoing sixth, seventh, or tenth aspect and the terminal in the foregoing eighth or ninth aspect.

### BRIEF DESCRIPTION OF DRAWINGS

FIG. 1 is a schematic diagram of a wireless communications system according to an embodiment of the present patent application;
FIG. 2 is a schematic interaction diagram of a communication method according to another embodiment of the present patent application;
FIG. 3 is a schematic interaction diagram of a communication method according to another embodiment of the present patent application;
FIG. 4 is a schematic interaction diagram of a communication method according to another embodiment of the present patent application;
FIG. 5 is a schematic structural diagram of a network device according to still another embodiment in embodiments of the present invention;
FIG. 6 is a schematic structural diagram of a terminal according to still another embodiment in embodiments of the present invention;
FIG. 7 is a schematic structural diagram of a network device according to still another embodiment in embodiments of the present invention; and
FIG. 8 is a schematic structural diagram of a terminal according to still another embodiment in embodiments of the present invention.

### DESCRIPTION OF EMBODIMENTS

In the specification, claims, and accompanying drawings of this patent application, the terms "first", "second", and so on are intended to distinguish between similar objects but do not necessarily indicate a specific order or sequence. It should be understood that the term in such a way are interchangeable in proper circumstances so that the embodiments of the present invention described in this specification can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units expressly listed, but may include other steps or units not expressly listed or inherent to such a process, method, system, product, or device.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "connection" in this specification may be a direct connection or an indirect connection. A "functional entity" is an entity that implements a function, and includes a corresponding hardware structure and/or software module that performs the function. The term "sending" in this specification may be direct sending or indirect sending by using another network element. The term "receiving" in this specification may be direct receiving or indirect receiving by using another network element.

The term "bearer" in this specification is a data transmission channel that corresponds to QoS and that is established to implement differentiated data transmission on a network. One bearer may be implemented in a manner of a data tunnel, for example, a GPRS tunneling protocol (GPRS Tunneling Protocol, GTP for short) based logical data transmission channel, or the like established between a source node and a destination node of data transmission. QoS control is not differentiated for all data flows on a bearer. For all the data flows, data packet forwarding and processing manners are the same, and data transmission is performed based on a transmission protocol corresponding to a transmission channel.

The term "data flow" in this specification is a data flow that is related to a service and that is generated by UE or the network. The QoS flow may be a form of the data flow. A service flow may also be a form of the data flow. The QoS flow may be considered as a smallest quality of service differentiation unit in a session (such as a PDU session). The QoS flow is identified by using a QoS flow ID. A core network device uses a same data forwarding manner for user plane data having a same QoS flow ID.

To transmit data to a peer end, the transmission needs to be performed on the network. The network converts higher layer data into a form suitable for the transmission on the network. A flow based transmission manner means that, for a data packet in a same flow, the network uses a same data packet forwarding manner (packet forwarding treatment), and processes the data packet by using a same QoS rule. The flow based transmission manner may include sending in a flow form and receiving in a flow form. It is different from a bearer based QoS control manner in which different data flows may be mapped to a same bearer, and QoS is not differentiated between data flows in a same bearer. A data flow and bearer mapping manner may be 1:1, or may be N:1. The mapping manner may alternatively be related to a QoS attribute of a data flow. For example, a 1:1 mapping manner is used for a data flow with a guaranteed bit rate (guaranteed bit rate, GBR for short); and an N:1 mapping manner is used for a data flow with a non-guaranteed bit rate (non-guaranteed bit rate, non-GBR for short).

When transmission is performed in a data flow manner, more refined granularities of QoS control and differentiation can be achieved. One or more data flows may be mapped to one bearer, and signaling overheads can be reduced when transmission is performed in a bearer manner. More data flows mapped to one bearer indicate fewer bearers that need to be established on the network, and fewer corresponding signaling overheads.

The term "IP flow" in this specification is higher layer (a MAC layer or a higher layer) data that is related to a service and that is generated by the UE or an external data network (DN), and the data may be based on the IP protocol, or may be based on a non-IP (non-IP) protocol. To implement a differentiated QoS service, the network maps IP flows to QoS flows based on QoS requirements corresponding to the different IP flows, and the different QoS flows correspond to different data packet treatment (data packet treatment) manners.

The term "QoS rule" in this specification refers to an information set formulated based on an operator policy, an application requirement, and a QoS parameter, to detect a data flow, define a related QoS parameter thereof, and determine a data flow transmission manner. The data flow transmission manner may include transmission performed in the flow manner or in the bearer manner. In the transmission in the flow manner, a data packet of a data flow may be transmitted in the flow manner. In the transmission in the bearer manner, one or more data flows may be mapped to one bearer and then transmitted.

The QoS rule may include QoS requirement information and/or the data flow transmission manner, for example, the transmission performed in the bearer manner or in the flow manner. The QoS requirement information may include a data rate, a transmission delay, and the like. The QoS rule may further include a bearer and data flow mapping rule.

The term "mapping" in this specification means that, one or more data flows with same or similar QoS are mapped to one bearer, and each bearer corresponds to one set of QoS parameters. The QoS parameters may include a QoS class of a service, a maximum bit rate (Maximum Bit Rate, MBR for short), an allocation and retention priority (Allocation and Retention Priority, ARP for short), and the like, and are used to identify a manner in which the network process data on the bearer. Same data forwarding and processing manners are used for data on a same bearer. A core network user plane (Core Network Control Plane, AN CP for short) functional entity and a UE user plane functional entity may map a plurality of data flow with different QoS to one or more bearers. A CN UP functional entity, the AN CP functional entity, and the UE user plane functional entity may perform a flow demapping operation.

The term "demapping" in this specification refers to an inverse process of the "mapping", to be specific, demapping data on a bearer to restore the data to different data flows. It should be noted that, the mapping process and the demapping process are both optional, and each user plane functional entity determines, based on an obtained QoS rule, whether to perform a corresponding operation.

The term "flow priority indicator (Flow Priority Indicator, FPI for short)" in this specification refers to a processing priority for each flow during processing of data corresponding to the flow. For example, the FPI may correspond to a priority of scheduling a flow by the network during congestion. The FPI may be an identifier similar to a QCI.

The term reflective QoS (Reflective QoS) in this specification means that, uplink data transmission QoS is a reflection of downlink data transmission QoS. A basic idea thereof is to determine QoS information of uplink data transmission based on QoS information of downlink data transmission.

The term "reflective QoS indication" (Reflective QoS Indication, RQI) in this specification refers to indication information used to indicate whether to perform data transmission by using a reflective QoS manner. If downlink data includes an RQI, the RQI may be used to indicate that a QoS control manner used in corresponding uplink data transmission is consistent with that used in downlink data transmission. The RQI may be applicable to a single data flow or aggregation of a plurality of data flows.

There are two data transmission manners, namely, the flow (such as a QoS flow) based and bearer based data transmission manners, inside the network. The flow based transmission manner means that, for the data packet in the same flow, the network uses the same data packet forwarding manner (packet forwarding treatment), and the network processes the data packet in the same flow by using the same QoS rule.

Data QoS control of the network includes two layers of QoS mapping (filtering), respectively non-access (Non-access stratum, NAS for short) stratum mapping and access (access stratum, AS for short) stratum mapping. The NAS stratum mapping is used to map an IP flow of higher layer (an IP layer or a higher layer) data to a QoS flow. During downlink transmission, the operation is mainly completed by a CN UP. During uplink transmission, the operation is mainly completed by the UE. The AS stratum mapping is used to map a QoS flow to a bearer. During the downlink transmission, the operation is mainly completed by an AN UP. During the uplink transmission, the operation is mainly completed by the UE.

The QoS rule may be obtained in two manners: (1) a signaling based manner; and (2) a reflective QoS based manner. The present invention may be applicable to a manner in which reflective QoS is used in NAS stratum mapping. An AN uses an independent QoS mapping manner, to be specific, the AN determines whether to use a signaling based QoS mapping manner or a reflective QoS based manner.

Specific embodiments are used below to describe in detail the technical solutions of the embodiments in the present invention. The following several specific embodiments may be combined with each other, and a same or similar concept or process may not be described repeatedly in some embodiments.

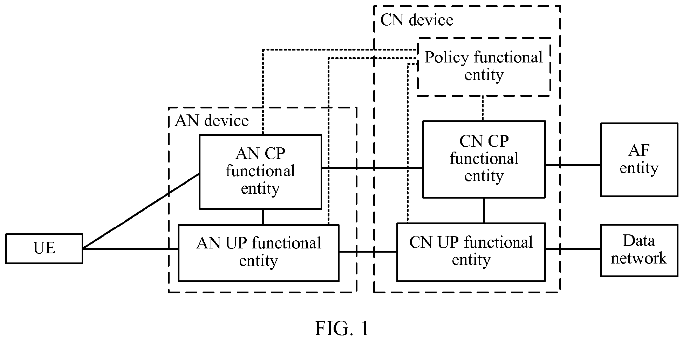

FIG. 1 is a schematic diagram of a wireless communications system according to an embodiment of the present invention. The wireless communications system includes UE, an access network (Access Network, AN for short) device, and a core network (Core Network, CN for short) device. The UE is connected to the AN device by using an air interface. The AN device may be connected to the CN device in a wired or wireless manner. The UE implements a communication service by using the AN device and the CN device.

The UE in the embodiments of this application may be referred to as a terminal, an access terminal, a subscriber unit, a subscriber station, a mobile station, a remote station, a remote terminal, a mobile device, a user terminal, a terminal, a wireless communications device, a user agent or a user apparatus. The access terminal may be a cellular phone, a cordless phone, a session initiation protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal in a future 5G network, or a terminal in a future evolved public land mobile network (Public Land Mobile Network, "PLMN" for short).

In the embodiments of this application, the AN device may be a device configured to communicate with a terminal. The AN device may be a base transceiver station (Base Transceiver Station, "BTS" for short) in a GSM or CDMA, or may be a NodeB (NodeB, "NB" for short) in a WCDMA system, or may be an evolved NodeB (evolved NodeB, "eNB or eNodeB" for short) in an LTE system, or may be a wireless controller in a cloud radio access network (Cloud Radio Access Network, "CRAN" for short) scenario. Alternatively, the AN device may be a relay station, an access point, an in-vehicle device, a wearable device, or an AN device in a future 5G network, or may be an AN device in a future evolved network. The AN device may alternatively be a next-generation NodeB (Next-generation NodeB, gNB for short), a transmit and receive point (Transmit and Receive Point, TRP for short), a central unit device (Central Unit, CU for short), a distributed unit device (Distributed Unit, DU for short), or the like.

In the embodiment shown in FIG. 1, the AN device includes an access network control plane (Access Network Control Plane, AN CP for short) functional entity and an access network user plane functional entity (Access Network User Plane, AN UP for short). The AN CP functional entity is connected to the AN UP functional entity. The AN CP functional entity has a QoS control function, and can control QoS processing of the AN UP functional entity. Optionally, the AN CP functional entity may send a QoS rule to the AN UP functional entity. The AN UP functional entity performs data transmission based on the received QoS rule.

The CN device may be a gateway, a router, a data center, a server, a network management device, or the like. In the embodiment shown in FIG. 1, the CN device includes a core network control plane (Core Network Control Plane, CN CP for short) functional entity and a core network user plane (Core Network User Plane, CN UP for short) functional entity.

The CN CP functional entity is connected to the CN UP functional entity. The CN CP functional entity has a QoS control function, and can control QoS processing of the CN UP functional entity. The CN CP functional entity may send a QoS rule to the CN UP functional entity. The CN UP functional entity performs data transmission based on the received QoS rule.

Optionally, the CN device may further include a policy functional entity. The policy functional entity is configured to: formulate a corresponding QoS control policy based on user subscription information and an operator policy, perform service QoS authorization for a received QoS authorization request, and the like. The policy functional entity may be separately connected to the AN CP functional entity and the CN CP functional entity. The policy functional entity is configured to send QoS authorization information to the AN CP functional entity and the CN CP functional entity. The policy functional entity may be further separately connected to the AN UP functional entity and the CN UP functional entity, to send the QoS authorization information to the AN UP functional entity and the CN UP functional entity.

In the embodiment shown in FIG. 1, both the AN device and the CN device have logically independent QoS control functions, respectively implemented by using the AN CP functional entity and the CN CP functional entity. The QoS control functions of the AN CP functional entity and the CN CP functional entity are similar, but control ranges of the two are different. The CN CP functional entity mainly controls QoS processing of the CN UP functional entity, and the AN CP functional entity mainly controls QoS processing of the AN UP functional entity. Resources of the core network and the access network are different. The core network and the access network should be capable of implementing respective flexible QoS management functions by using different QoS control methods based on respective resource usage.

In this embodiment, the AN device has a QoS management function, and can manage and control data transmission of an AN user plane, improving flexibility of service QoS management in a wireless communications network, and providing a possibility that respective QoS frames of the CN and the AN independently evolve.

The wireless communications system may further communicate with an application function (Application Function, AF for short) entity and a data network (Data Network, DN for short). The AF entity may provide a data flow service with a particular QoS requirement, and is similar to an application server. The AF entity may be deployed by a network operator, or may be deployed by a third party. The data network may provide a data service of a type, is usually an external network, and is similar to packet data network (Packet Data Network, PDN for short). Data network types include but are not limited to: the Internet (English: Internet) and an IP multimedia subsystem (English: IP Multimedia Subsystem, IMS for short).

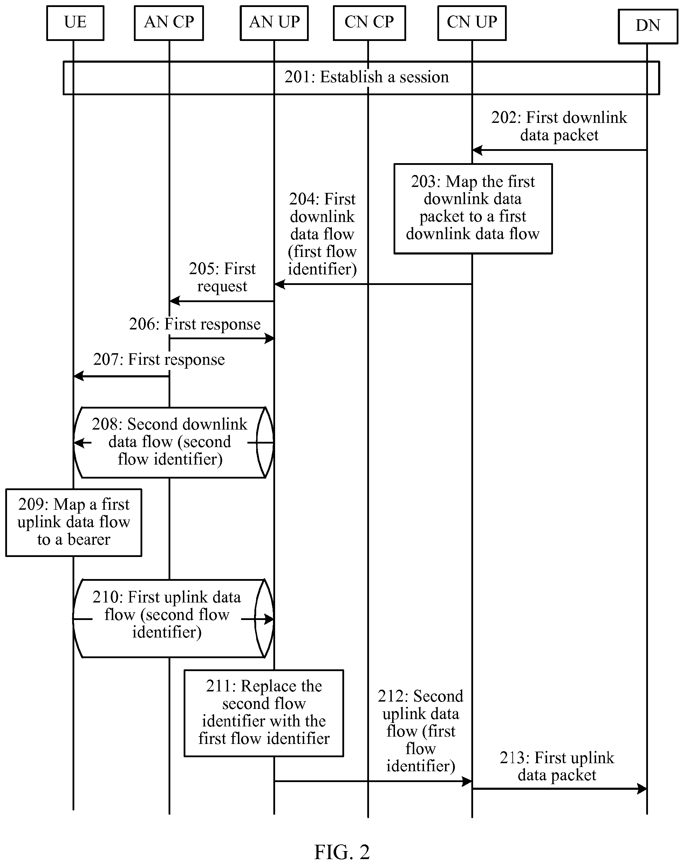

FIG. 2 is a schematic interaction diagram of a communication method according to an embodiment of the present patent application. As shown in FIG. 2, the method includes the following steps.

201: After a user successfully accesses a network, UE establishes a session (session) to a data network by using a wireless communications system. In this process, the UE obtains an identifier, such as an IP address, used to communicate with the data network. The established session may be a protocol data unit (Protocol Data Unit, PDU) session.

After session establishment is completed, a core network device (such as a CN CP functional entity) sends an NAS stratum filter to a CN UP functional entity and the UE. The filter is used to indicate how to map an IP flow to a data flow (such as a QoS flow). Optionally, the AN CP also sends an AS stratum filter to an AN UP functional entity and the UE. The AS stratum filter is used to indicate how to map a data flow to a bearer.

202: The data network sends a first downlink data packet to a core network device (such as the CN UP functional entity). The core network device receives the first downlink data packet. The first downlink data packet may be transmitted in an IP flow form. Specifically, the first downlink data packet may be a first downlink IP flow.

203: The core network device (such as the CN UP functional entity) processes the first downlink data packet (such as the downlink IP flow), and maps the first downlink data packet to a first downlink data flow. Specifically, the processing may be NAS stratum mapping, and the first downlink data flow may be a first downlink QoS flow.

The first downlink data flow corresponds to one FPI, denoted as FPI_1. Optionally, the core network device may further allocate a flow identifier (ID), referred to as a first flow identifier, to the first downlink data flow. The core network device adds data flow information to a data packet header of the first downlink data flow. For example, the first flow identifier may be added, or a flow priority (FPI) may be further added. Optionally, the core network device may further add an RQI to the data packet header of the first downlink data flow. In this way, the access network device may be clear that a corresponding uplink data flow may be transmitted based on a QoS attribute of the first downlink data flow. In a session, the first flow identifier may be unique. Optionally, if one terminal establishes a plurality of sessions, the first flow identifier may be unique for each terminal.

The first downlink IP flow may be mapped to the first downlink data flow in a template filtering based manner. For example, a parameter group is defined, and a value or a value range is set for each parameter in the group. When a value of a parameter related to a data packet is the same as a preset value or falls within a preset value range, the data packet may be mapped to a corresponding data flow. In an example, the parameter group may be an IP quintet. The IP quintet includes a destination IP address, a source IP address, a destination port number, a source port number, and a protocol type.

204: The core network device (such as the CN UP functional entity) sends the first downlink data flow to the access network device (such as the AN UP functional entity). The access network device receives the first downlink data flow. The first downlink data flow includes first downlink data. The first downlink data may be considered as a payload of the first downlink data flow. The packet header of the first downlink data flow includes the first flow identifier. Optionally, the packet header of the first downlink data flow may further include a flow priority. The first downlink data flow is transmitted in a flow form between the access network device and the core network device.

205: After the access network device (such as the AN UP functional entity) receives the first downlink data flow, the access network device obtains a second flow identifier. In an embodiment, the AN UP functional entity sends a first request message to the AN CP functional entity. The AN CP functional entity receives the first request message. The first request message includes the first flow identifier. The first request message is used to obtain the second flow identifier corresponding to the first flow identifier. Optionally, the first request message may further include QoS information of the first downlink data flow. The AN CP functional entity may determine, based on the QoS information, a bearer to which the first downlink data flow is mapped.

206: The AN CP functional entity generates the second flow identifier for the first downlink data flow. The AN CP functional entity sends a first response message to the AN UP functional entity. The first response message includes a mapping relationship between the second flow identifier and the first flow identifier. The AN UP functional entity may retain the mapping relationship between the second flow identifier and the first flow identifier. A length of the second flow identifier is less than a length of the first flow identifier. This is reflected in that, during transmission, a quantity of bits needing to be used by the second flow identifier is less than a quantity of bits needing to be used by the first flow identifier. The second flow identifier corresponds to the first flow identifier. The AN CP functional entity further determines a mapping relationship between the first downlink data flow and a bearer. Each second flow identifier is unique on a bearer corresponding to the second flow identifier. Each second flow identifier and the bearer on which the second flow identifier is located correspond to one unique first flow identifier.

A mapping relationship between a data flow and a bearer may be 1:1, or may be N:1. N is a positive integer greater than 1. For example, two data flows from the core network device may be mapped to a same bearer. In this case, N is 2.

Optionally, if the AN UP functional entity does not obtain the mapping relationship between the data flow and the bearer previously, the first response message may further include a mapping relationship between the first flow identifier and the bearer or a mapping relationship between the second flow identifier and the bearer.

207: The access network (such as the AN CP functional entity) sends the first response message to the terminal. The first response message includes the mapping relationship between the second flow identifier and the first flow identifier. Optionally, if the terminal does not obtain the mapping relationship between the data flow and the bearer previously, the first response message may further include a mapping relationship between the first flow identifier and the bearer or a mapping relationship between the second flow identifier and the bearer. The terminal may retain the mapping relationship between the second flow identifier and the first flow identifier. It should be noted that, a time when the AN CP functional entity sends the first response message to the terminal or the AN UP functional entity is not limited. The first response message may be first sent to the AN UP functional entity, or first sent to the terminal, or simultaneously sent to the AN UP functional entity and the terminal.

208: The access network device (such as the AN UP functional entity) sends a second downlink data flow that includes the first downlink data to the terminal, where the second downlink data flow includes the second flow identifier. The second downlink data flow is transmitted in a bearer form between the AN UP functional entity and the terminal. Specifically, the second downlink data flow is transmitted, on a downlink bearer, between the AN UP functional entity and the terminal.

209: When the UE needs to send first uplink data, the UE maps a first uplink data flow to a bearer. The first uplink data flow includes the first uplink data. Specifically, the UE may map the first uplink data flow to an uplink bearer. The uplink bearer and the downlink bearer may be a same bearer, or may be different bearers.

The UE may first map the first uplink data (such as an IP flow) to the first uplink data flow by using the NAS stratum filter. A specific manner is consistent with a manner in which an AN UP filters a downlink data packet to a data flow. The UE maps the first uplink data flow to the uplink bearer based on the mapping relationship between the data flow and the bearer, to perform data transmission.

When the first uplink data flow corresponds to the second downlink data flow, the UE may directly use the second flow identifier of the second downlink data flow. If a bearer used by the second downlink data flow is a bidirectional bearer, the UE may map the first uplink data flow to the bearer. That the uplink data flow corresponds to the downlink data flow includes: the uplink data flow and the downlink data flow belong to a same service flow, or the uplink data flow and the downlink data flow belong to a same session flow.

210: The terminal sends the first uplink data flow that includes the first uplink data to the access network device (such as the AN UP functional entity). The access network device receives the first uplink data flow sent by the terminal. The first uplink data flow includes the second flow identifier. The first uplink data flow is transmitted in the bearer manner. The first uplink data may be considered as a payload of the first uplink data flow.

211: The access network device (such as the AN UP functional entity) demaps the data flow on the bearer, and replaces the second flow identifier in the first uplink data flow with the first flow identifier. The access network device may further add a flow priority indicator (FPI) to a data packet header of the first uplink data flow.

212: The access network device (such as the AN UP functional entity) sends a second uplink data flow that includes the first uplink data to the core network device (such as the CN UP functional entity), where the second uplink data flow includes the first flow identifier. The second uplink data flow is transmitted in the flow form between the access network device and the core network device. The second uplink data flow and the first uplink data flow include the same payload (uplink data), but the two use different flow identifiers.

213: The core network device (such as the CN UP functional entity) sends, in an IP data packet form, the first uplink data in the received second uplink data flow to the data network.

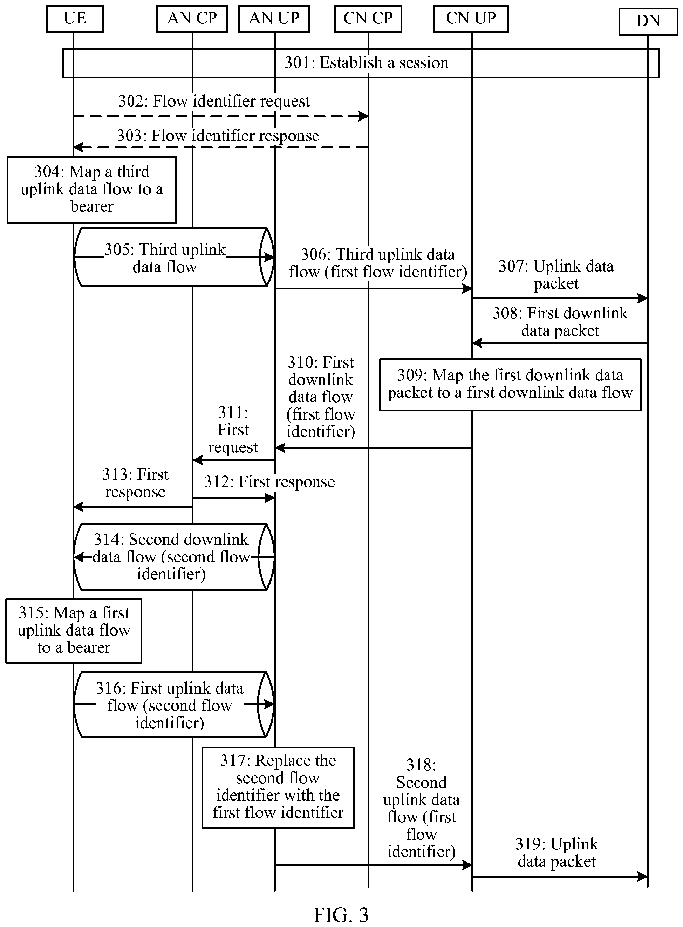

FIG. 3 is a schematic interaction diagram of a communication method according to another embodiment of the present patent application. As shown in FIG. 3, the method includes the following steps.

301: Basically same as 201. Refer to 201, and details are not described herein again.

302: The UE has uplink data to send, and the UE sends a flow identifier request to a core network device (such as a CN CP functional entity). The flow identifier request is used to request a first flow identifier corresponding to the uplink data. If the UE has the first flow identifier corresponding to the uplink data, steps 302 and 303 may be omitted.

303: The core network device sends a flow identifier response to the UE, and the UE correspondingly receives the flow identifier response. The flow identifier response includes the first flow identifier.

304: When the UE needs to send the uplink data, the UE maps an uplink data flow to a bearer. The uplink data flow includes the uplink data.

Specifically, the UE may first map the uplink data (such as an IP flow) to the data flow (such as a QoS flow) by using an NAS stratum filter. For a specific manner, refer to the foregoing description. The UE maps the data flow to the bearer based on a mapping relationship between the data flow and the bearer, to perform data transmission. To be differentiated from other data and another data flow, the uplink data in this step may be referred to as third uplink data, the uplink data flow in this step may be referred to as a third uplink data flow.

305: The terminal sends the third uplink data flow that includes the third uplink data to an access network device (such as the AN UP functional entity). The access network device receives the third uplink data flow sent by the terminal. When a second flow identifier corresponding to the third uplink data flow is not obtained for the third uplink data flow, the third uplink data flow includes the first flow identifier. When the second flow identifier corresponding to the third uplink data flow is obtained for the third uplink data flow, the third uplink data flow includes the second flow identifier. Before step 305, the UE may send a flow identifier request to the access network device (such as the AN CP functional entity) to obtain the second flow identifier.

The second flow identifier corresponds to the first flow identifier. A length of the second flow identifier is less than a length of the first flow identifier. The second flow identifier is used to identify a data flow transmitted between the UE and the access network device, and the first flow identifier is used to identify a data flow transmitted between the core network device and the access network device.

306: The access network device (such as the AN UP functional entity) demaps the third uplink data flow in the bearer. If the third uplink data flow includes the second flow identifier, the access network device replaces the second flow identifier in the third uplink data flow with the first flow identifier. The access network device may further add a flow priority indicator to a data packet header of the third uplink data flow. If the third uplink data flow includes the first flow identifier, the access network device does not need to perform the foregoing replacement operation.

307: The core network device (such as the CN UP functional entity) sends, in an IP data packet form, the third uplink data in the received third uplink data flow to the data network.

308 to 319: Basically same as 202 to 213. Refer to 202 to 213, and details are not described herein again.

In this embodiment, the terminal first performs transmission of uplink data. When performing the transmission of the uplink data, if the terminal obtains only the first flow identifier but does not obtain the second flow identifier whose length is smaller, the first flow identifier is used when the uplink data is transmitted between the terminal and the access network device. The terminal may obtain the second flow identifier through corresponding downlink data transmission. The second flow identifier is used in subsequent data transmission.

When the terminal first performs the transmission of the uplink data, the terminal may further obtain, in a signaling manner, the second flow identifier whose length is smaller. For example, the terminal sends a request to the access network device to obtain the second flow identifier, and the access network device sends a response to the terminal. The response may include the second flow identifier. In this way, when the uplink data is transmitted between the terminal and the access network device, the second flow identifier is used. After receiving the uplink data, the access network device replaces the second flow identifier with the first flow identifier, and the first flow identifier is used when the uplink data is transmitted between the access network device and the core network device.

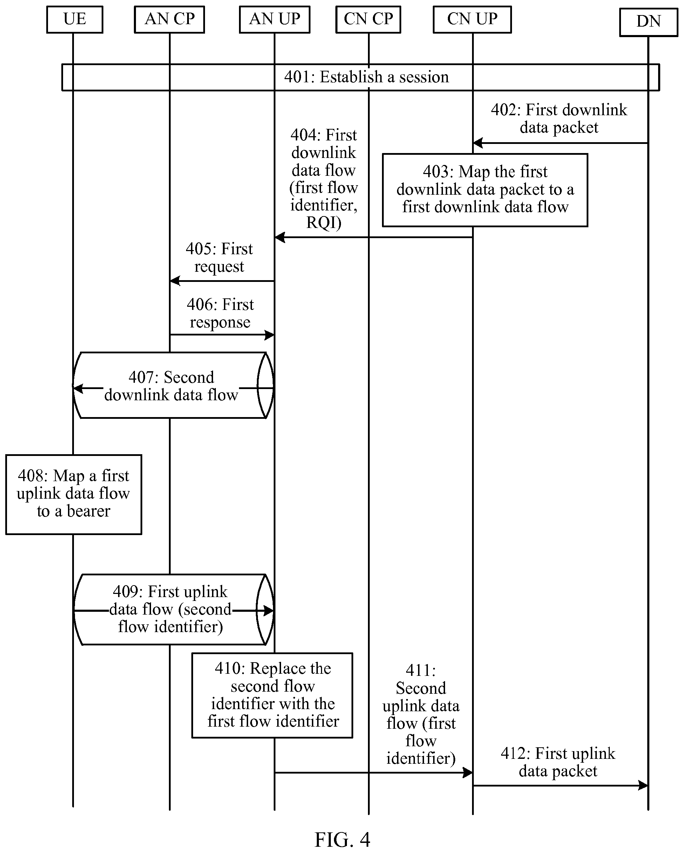

FIG. 4 is a schematic interaction diagram of a communication method according to another embodiment of the present patent application. As shown in FIG. 4, the method includes the following steps.

401: After a user successfully accesses a network, UE establishes a session (session) to data network by using a wireless communications system. In this process, the UE obtains an identifier, such as an IP address, used to communicate with the data network. The established session may be a protocol data unit (Protocol Data Unit, PDU) session.

After session establishment is completed, a core network device (such as a CN CP functional entity) sends an NAS stratum filter to a CN UP functional entity and the UE. The filter is used to indicate how to map an IP flow to a data flow (such as a QoS flow). A reflective QoS mechanism is used in this embodiment. An AN CP does not need to send an AS stratum filter to an AN UP functional entity and the UE.

402: Basically same as 202. Refer to 202, and details are not described herein again.

403: Basically same as 203. Refer to 203, and details are not described herein again.

404: The core network device (such as the CN UP functional entity) sends the first downlink data flow to the access network device (such as the AN UP functional entity). The access network device receives the first downlink data flow. The first downlink data flow includes first downlink data. The first downlink data may be considered as a payload of the first downlink data flow. A packet header of the first downlink data flow includes the first flow identifier. The packet header of the first downlink data flow further includes an RQI. Optionally, the packet header of the first downlink data flow may further include a flow priority. The first downlink data flow is transmitted in a flow form between the access network device and the core network device.

405: Basically same as 205. Refer to 205, and details are not described herein again.

406: Basically same as 206. Refer to 206, and details are not described herein again.

407: The access network device (such as the AN UP functional entity) sends a second downlink data flow that includes the first downlink data to the terminal. The second downlink data flow is transmitted in a bearer form between the AN UP functional entity and the terminal. In this embodiment, the mapping relationship between the first flow identifier and the second flow identifier is sent to the UE in a data form. The first one or the first group in the second downlink data flow includes both the first flow identifier and the second flow identifier. After obtaining the first one or the first group in the second downlink data flow, the UE may obtain the mapping relationship between the first flow identifier and the second flow identifier. A data flow after the first one or the first group in the second downlink data flow needs to include only the second flow identifier. Optionally, the second downlink data flow may further include an RQI. If the second downlink data flow includes the RQI, when sending a corresponding uplink data flow, the UE maps the uplink data flow to a bearer, whose QoS attribute is the same, of a downlink data flow corresponding to the uplink data flow. If the second downlink data flow does not include the RQI, the UE performs mapping from the data flow to the bearer based on the AS stratum filter obtained after the session establishment is completed. Refer to the description in Embodiment 1. In Embodiment 1, the uplink data flow and the downlink data flow corresponding to the uplink data flow may be mapped to different bearers. If the UE does not obtain the AS stratum filter after the session establishment is completed, and the second downlink data flow does not include the RQI indication, the UE may map the uplink data flow to a default bearer.

408: When the UE needs to send first uplink data, the UE maps a first uplink data flow to a bearer. The first uplink data flow includes the first uplink data. Specifically, the UE may map the first uplink data flow to an uplink bearer. The uplink bearer and a downlink bearer may be a same bearer, or may be different bearers. When the uplink bearer and the downlink bearer are different bearers, QoS attributes of the uplink bearer and the downlink bearer are the same.

The UE may first map the first uplink data (such as an IP flow) to the first uplink data flow by using the NAS stratum filter. A specific manner is consistent with a manner in which an AN UP filters a downlink data packet to a data flow.

When the second downlink data flow includes the RQI, if the first uplink data flow corresponds to the second downlink data flow, the uplink bearer is determined based on the downlink bearer. That the uplink data flow corresponds to the downlink data flow includes: an ID of the uplink data flow is the same as an ID of the downlink data flow, the uplink data flow and the downlink data flow belong to a same service flow, or the uplink data flow and the downlink data flow belong to a same session flow. That the uplink bearer is determined based on the downlink bearer includes: the uplink bearer and the downlink bearer are a same bearer, or a quality of service QoS attribute of the uplink bearer is the same as a QoS attribute of the downlink bearer.

409 to 412: Basically same as 210 to 213. Refer to 210 to 213, and details are not described herein again.

In the present patent application, the AN CP functional entity and the AN UP functional entity may be implemented on a same physical device. In this way, a signaling interaction between the two functional entities may be omitted.

In the present patent application, the first flow identifier may be considered as an NAS stratum QoS flow ID, and the second flow identifier may be considered as an AS stratum QoS flow ID. During downlink data transmission, when the core network device maps the IP flow to the QoS flow, an NAS stratum QoS flow ID is generated. The ID is unique in a session, and the ID is used to identify the QoS flow transmitted between the core network device and the access network device. After data arrives at the access network device, the access network device maps the QoS flow to a bearer, and generates an AS stratum QoS flow ID corresponding to the NAS stratum QoS flow ID. The access network device replaces the NAS stratum QoS flow ID with the AS stratum QoS flow ID. The ID is unique on one bearer.

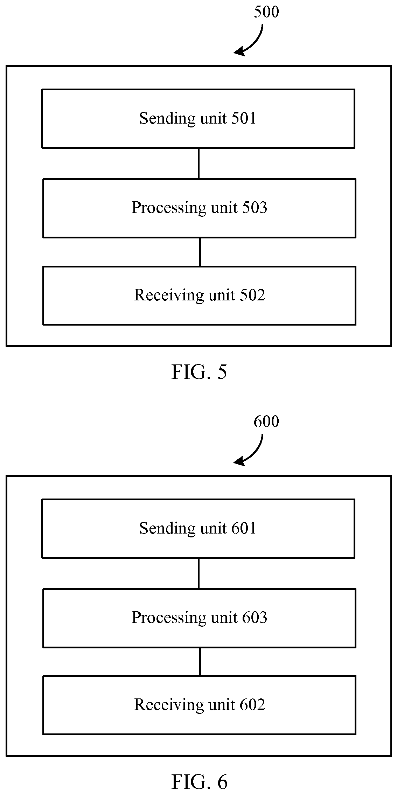

FIG. 5 is a schematic block diagram of a network device 500 according to an embodiment of the present invention. It should be understood that, the network device 5 can perform the steps performed by the access network device in the method of FIG. 2 to FIG. 4. To avoid a repetition, details are not described herein again. The network device 500 may be the access network device, and may include an AN CP functional entity and/or the AN UP functional entity.

A sending unit 501 is configured to perform the sending steps of the AN CP functional entity and/or the AN UP functional entity in FIG. 2 to FIG. 4. For example, when the network device 500 includes the AN CP functional entity, the sending unit 501 may be configured to perform the sending steps of the AN CP functional entity in FIG. 2 to FIG. 4. Specifically, sending a first response may be included. When the network device 500 includes the AN UP functional entity, the sending unit 501 may be configured to perform the sending steps of the AN UP functional entity in FIG. 2 to FIG. 4. Specifically, sending a downlink data flow (such as a second downlink data flow) to a terminal and/or sending an uplink data flow (such as a second uplink data flow and/or a third uplink data flow) to a core network device may be included.

A receiving unit 502 is configured to perform the receiving steps of the AN CP functional entity and/or the AN UP functional entity in FIG. 2 to FIG. 4. For example, when the network device 500 includes the AN CP functional entity, the receiving unit 502 may be configured to perform the receiving steps of the AN CP functional entity in FIG. 2 to FIG. 4. Specifically, receiving a first request may be included. When the network device 500 includes the AN UP functional entity, the receiving unit 502 may be configured to perform the receiving steps of the AN UP functional entity in FIG. 2 to FIG. 4. Specifically, receiving an uplink data flow sent by the terminal, receiving a downlink data flow sent by the core network device, and/or the like may be included.

A processing unit 503 is configured to perform a step other than the sending and receiving steps of the AN CP functional entity and/or the AN UP functional entity in FIG. 2 to FIG. 4. When the network device 500 includes the AN CP functional entity, the processing unit 503 may be configured to generate a second flow identifier. When the network device 500 includes the AN UP functional entity, the processing unit 503 may be configured to replace a first flow identifier in downlink data with a second flow identifier and/or replace a second flow identifier in uplink data with a first flow identifier and/or add a second flow identifier to the first piece of data or the first group of data in the downlink data flow in a reflective QoS scenario.

It should be understood that, an action performed by the processing unit 503 may be implemented by a processor, and actions performed by the sending unit 501 and the receiving unit 502 may be implemented by a transceiver under the control of the processor.

FIG. 6 is a schematic block diagram of a terminal 600 according to an embodiment of the present invention. It should be understood that, the terminal 600 can perform the steps performed by the UE in the method of FIG. 2 to FIG. 4. To avoid a repetition, details are not described herein again. The terminal 600 includes:
a sending unit 601, configured to perform the sending steps of the UE in FIG. 2 to FIG. 4, for example, sending of the uplink data flow;
a receiving unit 602, configured to perform the receiving steps of the UE in FIG. 2 to FIG. 4, for example, receiving of the downlink data flow; and
a processing unit 603, configured to perform a step other than the sending and receiving steps of the UE in FIG. 2 to FIG. 4, for example, mapping of data to a bearer (for example, mapping of the uplink data flow to the bearer).

It should be understood that, an action performed by the processing unit 603 may be implemented by a processor, and actions performed by the sending unit 601 and the receiving unit 602 may be implemented by a transceiver under the control of the processor.

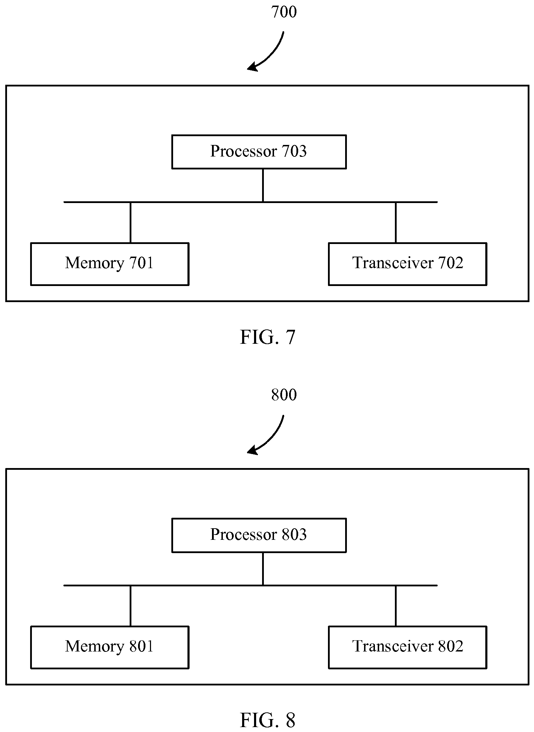

FIG. 7 is a schematic structural block diagram of an apparatus according to an embodiment of the present invention. The apparatus 700 can perform the steps performed by the AN CP functional entity and/or the AN UP functional entity in the method of FIG. 2 to FIG. 4. The apparatus 700 includes: a memory 701, a transceiver 702, and a processor 703. The memory 701 is configured to store a program. The transceiver 702 is configured to communicate with another device, such as UE. The processor 703 is separately connected to the memory 701 and the transceiver 702, to execute the program in the memory 701. When the program in the memory 701 is executed, the apparatus 700 is enabled to perform the actions performed by the AN CP functional entity and/or the AN UP functional entity in FIG. 2 to FIG. 4.

It should be noted that, in some cases, the memory may be omitted, and only the processor and the transceiver are included. The processor directly controls the transceiver to perform the actions performed by the AN CP functional entity and/or the AN UP functional entity in FIG. 2 to FIG. 4.

FIG. 8 is a schematic structural block diagram of an apparatus according to an embodiment of the present invention. The apparatus 800 can perform the steps performed by the UE in the method of FIG. 2 to FIG. 4. The apparatus 800 includes: a memory 801, a transceiver 802, and a processor 803. The memory 801 is configured to store a program. The transceiver 802 is configured to communicate with another device, such as an AN CP functional entity and/or an AN UP functional entity. The processor 803 is separately connected to the memory 801 and the transceiver 802, to execute the program in the memory 801. When the program in the memory 801 is executed, the apparatus 8 is enabled to perform the actions performed by the UE in FIG. 2 to FIG. 4.

It should be noted that, in some cases, the memory may be omitted, and only the processor and the transceiver are included. The processor directly controls the transceiver to perform the actions performed by the AN CP functional entity and/or the AN UP functional entity in FIG. 2 to FIG. 4.

It should be understood that in the embodiment of the present invention, the processor in the foregoing apparatus may be a central processing unit (Central Processing Unit, CPU), or the processor may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the described system, apparatus, and method may be implemented in other manners. For example, the apparatus embodiments described above are merely examples. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

All or some of the foregoing embodiments may be implemented by using software, hardware, firmware, or any combination thereof. When the embodiments are implemented by using the hardware, some or all of the embodiments may be implemented in a processor or integrated logic circuit form. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, information a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A wireless communication method, comprising the following steps:
receiving, by an access network device (500), a first downlink data flow that comprises first downlink data and that is sent by a core network device, wherein the first downlink data flow further comprises a first flow identifier; and
sending, by the access network device (500), a second downlink data flow that comprises the first downlink data to a terminal (600), wherein the second downlink data flow further comprises a second flow identifier, wherein
a length of the second flow identifier is less than a length of the first flow identifier, and the first flow identifier corresponds to the second flow identifier,
wherein the method further comprises:
sending, by the access network device (500), a mapping relationship between the second flow identifier and the first flow identifier to the terminal (600).

2. The wireless communication method according to claim 1, wherein the method further comprises:
receiving, by the access network device (500), a first uplink data flow that comprises first uplink data and that is sent by the terminal (600), wherein the first uplink data flow comprises the second flow identifier; and
sending, by the access network device (500), a second uplink data flow that comprises the first uplink data to the core network device, wherein the second uplink data flow comprises the first flow identifier.

3. A wireless communication method, comprising the following steps:
obtaining, by a terminal (600), a mapping relationship between a second flow identifier and a first flow identifier; and
receiving, by the terminal (600), a downlink data flow sent by an access network device (500), wherein the downlink data flow comprises first downlink data and further comprises the second flow identifier, wherein
a length of the second flow identifier is less than a length of the first flow identifier, the downlink data flow is identified by using the second flow identifier when the downlink data flow is transmitted between the access network device (500) and the terminal (600), and the downlink data flow is identified by using the first flow identifier when the downlink data flow is transmitted between the access network device (500) and a core network device,
wherein the obtaining, by the terminal (600), the mapping relationship between a second flow identifier and a first flow identifier comprises: receiving, by the terminal (600), first information from the access network device (500), wherein the first information comprises information about the mapping relationship between the second flow identifier and the first flow identifier.

4. The wireless communication method according to claim 3, wherein the method further comprises:
sending, by the terminal (600), an uplink data flow to the access network device (500), wherein the uplink data flow comprises the second flow identifier, wherein
the uplink data flow is identified by using the second flow identifier when the uplink data flow is transmitted between the access network device (500) and the terminal (600); and the uplink data flow is identified by using the first flow identifier when the uplink data flow is transmitted between the access network device (500) and the core network device.

5. A access network device (500), comprising:
a receiving unit (502), configured to receive a first downlink data flow that comprises first downlink data and that is sent by a core network device, wherein the first downlink data flow further comprises a first flow identifier; and
a sending unit (501), configured to send a second downlink data flow that comprises the first downlink data to a terminal (600), wherein the second downlink data flow further comprises a second flow identifier, wherein
a length of the second flow identifier is less than a length of the first flow identifier, and the first flow identifier corresponds to the second flow identifier,
wherein the sending unit (501) is further configured to send a mapping relationship between the second flow identifier and the first flow identifier to the terminal (600).

6. A terminal (600), comprising:
a processing unit (603), wherein the processing unit (603) is configured to obtain a mapping relationship between a second flow identifier and a first flow identifier; and
a receiving unit (602), configured to receive a downlink data flow sent by an access network device (500), wherein the downlink data flow comprises first downlink data and further comprises the second flow identifier, wherein
a length of the second flow identifier is less than a length of the first flow identifier, the downlink data flow is identified by using the second flow identifier when the downlink data flow is transmitted between the access network device (500) and the terminal (600),
wherein the receiving unit (602) is further configured to receive first information from the access network device (500) to obtain the mapping relationship between the second flow identifier and the first flow identifier, wherein the first information comprises information about the mapping relationship between the second flow identifier and the first flow identifier.

## Patentansprüche

1. Drahtloskommunikationsverfahren, umfassend die folgenden Schritte:
Empfangen eines ersten Downlink-Datenflusses, der erste Downlink-Daten umfasst und durch eine Kernnetzwerkvorrichtung gesendet wird, durch eine Zugangsnetzwerkvorrichtung (500), wobei der erste Downlink-Datenfluss ferner eine erste Flusskennung umfasst; und
Senden eines zweiten Downlink-Datenflusses, der die ersten Downlink-Daten umfasst, durch die Zugangsnetzwerkvorrichtung (500) an ein Endgerät (600), wobei der zweite Downlink-Datenfluss ferner eine zweite Flusskennung umfasst, wobei
eine Länge der zweiten Flusskennung kürzer als eine Länge der ersten Flusskennung ist und die erste Flusskennung der zweiten Flusskennung entspricht,
wobei das Verfahren ferner Folgendes umfasst:
Senden einer Zuordnungsbeziehung zwischen der zweiten Flusskennung und der ersten Flusskennung durch die Zugangsnetzwerkvorrichtung (500) an das Endgerät (600).

2. Drahtloskommunikationsverfahren nach Anspruch 1, wobei das Verfahren ferner Folgendes umfasst:
Empfangen eines ersten Uplink-Datenflusses, der erste Uplink-Daten umfasst und der durch das Endgerät (600) gesendet wird, durch die Zugangsnetzwerkvorrichtung (500), wobei der erste Uplink-Datenfluss die zweite Flusskennung umfasst; und
Senden eines zweiten Uplink-Datenflusses, der die ersten Uplink-Daten umfasst, durch die Zugangsnetzwerkvorrichtung (500) an die Kernnetzwerkvorrichtung, wobei der zweite Uplink-Datenfluss die erste Flusskennung umfasst.

3. Drahtloskommunikationsverfahren, umfassend die folgenden Schritte:
Erlangen einer Zuordnungsbeziehung zwischen einer zweiten Flusskennung und einer ersten Flusskennung durch ein Endgerät (600); und
Empfangen eines Downlink-Datenflusses, der durch eine Zugangsnetzwerkvorrichtung (500) gesendet wird, durch das Endgerät (600), wobei der Downlink-Datenfluss erste Downlink-Daten umfasst und ferner die zweite Flusskennung umfasst, wobei eine Länge der zweiten Flusskennung kürzer als eine Länge der ersten Flusskennung ist, der Downlink-Datenfluss unter Verwendung der zweiten Flusskennung identifiziert wird, wenn der Downlink-Datenfluss zwischen der Zugangsnetzwerkvorrichtung (500) und dem Endgerät (600) übertragen wird, und der Downlink-Datenfluss unter Verwendung der ersten Flusskennung identifiziert wird, wenn der Downlink-Datenfluss zwischen der Zugangsnetzwerkvorrichtung (500) und einer Kernnetzwerkvorrichtung übertragen wird,
wobei das Erlangen der Zuordnungsbeziehung zwischen einer zweiten Flusskennung und einer ersten Flusskennung durch das Endgerät (600) Folgendes umfasst: Empfangen erster Informationen von der Zugangsnetzwerkvorrichtung (500) durch das Endgerät (600), wobei die ersten Informationen Informationen über die Zuordnungsbeziehung zwischen der zweiten Flusskennung und der ersten Flusskennung umfassen.

4. Drahtloskommunikationsverfahren nach Anspruch 3, wobei das Verfahren ferner Folgendes umfasst:
Senden eines Uplink-Datenflusses durch das Endgerät (600) an die Zugangsnetzwerkvorrichtung (500), wobei der Uplink-Datenfluss die zweite Flusskennung umfasst, wobei
der Uplink-Datenfluss unter Verwendung der zweiten Flusskennung identifiziert wird, wenn der Uplink-Datenfluss zwischen der Zugangsnetzwerkvorrichtung (500) und dem Endgerät (600) übertragen wird; und der Uplink-Datenfluss unter Verwendung der ersten Flusskennung identifiziert wird, wenn der Uplink-Datenfluss zwischen der Zugangsnetzwerkvorrichtung (500) und der Kernnetzwerkvorrichtung übertragen wird.

5. Zugangsnetzwerkvorrichtung (500), umfassend:
eine Empfangseinheit (502), die dazu konfiguriert ist, einen ersten Downlink-Datenfluss zu empfangen, der erste Downlink-Daten umfasst und durch eine Kernnetzwerkvorrichtung gesendet wird, wobei der erste Downlink-Datenfluss ferner eine erste Flusskennung umfasst; und
eine Sendeeinheit (501), die dazu konfiguriert ist, einen zweiten Downlink-Datenfluss, der die ersten Downlink-Daten umfasst, an ein Endgerät (600) zu senden, wobei der zweite Downlink-Datenfluss ferner eine zweite Flusskennung umfasst, wobei
eine Länge der zweiten Flusskennung kürzer als eine Länge der ersten Flusskennung ist und die erste Flusskennung der zweiten Flusskennung entspricht,
wobei die Sendeeinheit (501) ferner dazu konfiguriert ist, eine Zuordnungsbeziehung zwischen der zweiten Flusskennung und der ersten Flusskennung an das Endgerät (600) zu senden.

6. Endgerät (600), umfassend:
eine Verarbeitungseinheit (603), wobei die Verarbeitungseinheit (603) dazu konfiguriert ist, eine Zuordnungsbeziehung zwischen einer zweiten Flusskennung und einer ersten Flusskennung zu erlangen; und
eine Empfangseinheit (602), die dazu konfiguriert ist, einen Downlink-Datenfluss, der durch eine Zugangsnetzwerkvorrichtung (500) gesendet wird, zu empfangen, wobei der Downlink-Datenfluss erste Downlink-Daten umfasst und ferner die zweite Flusskennung umfasst, wobei
eine Länge der zweiten Flusskennung kürzer als eine Länge der ersten Flusskennung ist, der Downlink-Datenfluss unter Verwendung der zweiten Flusskennung identifiziert wird, wenn der Downlink-Datenfluss zwischen der Zugangsnetzwerkvorrichtung (500) und dem Endgerät (600) übertragen wird,
wobei die Empfangseinheit (602) ferner dazu konfiguriert ist, erste Informationen von der Zugangsnetzwerkvorrichtung (500) zu empfangen, um die Zuordnungsbeziehung zwischen der zweiten Flusskennung und der ersten Flusskennung zu erlangen, wobei die ersten Informationen Informationen über die Zuordnungsbeziehung zwischen der zweiten Flusskennung und der ersten Flusskennung umfassen.

## Revendications

1. Procédé de communication sans fil, comprenant les étapes suivantes :
la réception, par un dispositif de réseau d'accès (500), d'un premier flux de données de liaison descendante qui comprend des premières données de liaison descendante et qui est envoyé par un dispositif de réseau central, dans lequel le premier flux de données de liaison descendante comprend également un premier identifiant de flux ; et
l'envoi, par le dispositif de réseau d'accès (500), d'un second flux de données de liaison descendante qui comprend les premières données de liaison descendante à un terminal (600), dans lequel le second flux de données de liaison descendante comprend également un second identifiant de flux, dans lequel une longueur du second identifiant de flux est inférieure à une longueur du premier identifiant de flux, et le premier identifiant de flux correspond au second identifiant de flux,
dans lequel le procédé comprend également :
l'envoi, par le dispositif de réseau d'accès (500), d'une relation de mappage entre le second identifiant de flux et le premier identifiant de flux au terminal (600).

2. Procédé de communication sans fil selon la revendication 1, dans lequel le procédé comprend également :
la réception, par le dispositif de réseau d'accès (500), d'un premier flux de données de liaison montante qui comprend des premières données de liaison montante et qui est envoyé par le terminal (600), dans lequel le premier flux de données de liaison montante comprend le second identifiant de flux ; et
l'envoi, par le dispositif de réseau d'accès (500), d'un second flux de données de liaison montante qui comprend les premières données de liaison montante au dispositif de réseau central, dans lequel le second flux de données de liaison montante comprend le premier identifiant de flux.

3. Procédé de communication sans fil, comprenant les étapes suivantes :
l'obtention, par un terminal (600), d'une relation de mappage entre un second identifiant de flux et un premier identifiant de flux ; et
la réception, par le terminal (600), d'un flux de données de liaison descendante envoyé par un dispositif de réseau d'accès (500), dans lequel le flux de données de liaison descendante comprend des premières données de liaison descendante et comprend également le second identifiant de flux, dans lequel
une longueur du second identifiant de flux est inférieure à une longueur du premier identifiant de flux, le flux de données de liaison descendante est identifié à l'aide du second identifiant de flux lorsque le flux de données de liaison descendante est transmis entre le dispositif de réseau d'accès (500) et le terminal (600), et le flux de données de liaison descendante est identifié à l'aide du premier identifiant de flux lorsque le flux de données de liaison descendante est transmis entre le dispositif de réseau d'accès (500) et un dispositif de réseau central,
dans lequel l'obtention, par le terminal (600), de la relation de mappage entre un second identifiant de flux et un premier identifiant de flux comprend : la réception, par le terminal (600), de premières informations provenant du dispositif de réseau d'accès (500), dans lequel les premières informations comprennent des informations sur la relation de mappage entre le second identifiant de flux et le premier identifiant de flux.

4. Procédé de communication sans fil selon la revendication 3, dans lequel le procédé comprend également :
l'envoi, par le terminal (600), d'un flux de données de liaison montante au dispositif de réseau d'accès (500), dans lequel le flux de données de liaison montante comprend le second identifiant de flux, dans lequel
les données de liaison montante sont identifiées à l'aide du second identifiant de flux lorsque le flux de données de liaison montante est transmis entre le dispositif de réseau d'accès (500) et le terminal (600) ; et le flux de données de liaison montante est identifié à l'aide du premier identifiant de flux lorsque le flux de données de liaison montante est transmis entre le dispositif de réseau d'accès (500) et le dispositif de réseau central.

5. Dispositif de réseau d'accès (500), comprenant :
une unité de réception (502), configurée pour recevoir un premier flux de données de liaison descendante qui comprend des premières données de liaison descendante et qui est envoyé par un dispositif de réseau central, dans lequel le premier flux de données de liaison descendante comprend également un premier identifiant de flux ; et
une unité d'envoi (501), configurée pour envoyer un second flux de données de liaison descendante qui comprend les premières données de liaison descendante à un terminal (600), dans lequel le second flux de données de liaison descendante comprend également un second identifiant de flux, dans lequel
une longueur du second identifiant de flux est inférieure à une longueur du premier identifiant de flux, et le premier identifiant de flux correspond au second identifiant de flux,
dans lequel l'unité d'envoi (501) est également configurée pour envoyer une relation de mappage entre le second identifiant de flux et le premier identifiant de flux au terminal (600).

6. Terminal (600), comprenant :
une unité de traitement (603), dans lequel l'unité de traitement (603) est configurée pour obtenir une relation de mappage entre un second identifiant de flux et un premier identifiant de flux ; et
une unité de réception (602), configurée pour recevoir un flux de données de liaison descendante envoyé par un dispositif de réseau d'accès (500), dans lequel le flux de données de liaison descendante comprend des premières données de liaison descendante et comprend également le second identifiant de flux,
dans lequel
une longueur du second identifiant de flux est inférieure à une longueur du premier identifiant de flux, le flux de données de liaison descendante est identifié à l'aide du second identifiant de flux lorsque le flux de données de liaison descendante est transmis entre le dispositif de réseau d'accès (500) et le terminal (600),
dans lequel l'unité de réception (602) est également configurée pour recevoir des premières informations du dispositif de réseau d'accès (500) pour obtenir la relation de mappage entre le second identifiant de flux et le premier identifiant de flux, dans lequel les premières informations comprennent des informations sur la relation de mappage entre le second identifiant de flux et le premier identifiant de flux.
